# EUROPEAN PATENT SPECIFICATION

(11) **EP 2 934 156 B1**
(45) Date of publication and mention of the grant of the patent: **20.02.2019**
(21) Application number: 13815613.8
(22) Date of filing: 05.12.2013
(51) Int. Cl.: A23B 7/152, B65D 81/20, B65D 85/34

(54) **MODIFIED ATMOSPHERE PACKAGE FOR BANANAS**
VERPACKUNG MIT MODIFIZIERTER ATMOSPHÄRE FÜR BANANEN
CONDITIONNEMENT À ATMOSPHÈRE MODIFIÉE POUR DES BANANES

(30) Priority: 18.12.2012 US 201261738455 P
(43) Date of publication of application: 28.10.2015
(73) Proprietor: AgroFresh Inc., Philadelphia, PA 19106 (US)
(72) Inventor: BALASUBRAMANIAN, Aishwaraya, Somerset, NJ 08873 (US); MIR, Nazir, North Brunswick, NJ 08902 (US); MCGEE, Robert, L., Midland, MI 48642 (US); MENNING, Bruce, A., Midland, MI 48640 (US); JAMES, William, Fort Washington, PA 19034 (US)
(74) Representative: HGF Limited
(86) International application number: PCT/US2013/073287
(87) International publication number: WO 2014/099396

(56) References cited:
- WO-A1-2009/031992
- WO-A1-2009/032169
- WO-A1-2011/043992
- WO-A1-2011/082059
- US-A1- 2002 127 305

## Description

### CROSS-REFERENCE TO RELATED APPLICATIONS

Bananas are normally harvested by cutting a bunch of bananas from the pseudostem on which it grew. Subsequent to harvest, bunches are often broken down into smaller connected groups called "hands" or, synonymously, "clusters." It is common to harvest and then ship bananas while the peels are green. Long-distance shipment is often performed at low temperature (for example, at 14°C). The length of time of the shipment is often 1 week or more. Bananas are considered to ripen very slowly during such shipment, during which the bananas normally remain green.

It is also common, once the bananas have reached a location near where they will be sold, to place them in an enclosed volume and expose them to ethylene gas. Typical ethylene exposure is 24-48 hours at 14-18°C in an atmosphere that contains ethylene at a concentration of 100-1000 parts per million (ppm). After the exposure to ethylene, the bananas normally ripen more quickly. As the bananas ripen during a normal ripening process, the peels gradually turn yellow; the peels remain yellow for some time; then the peels develop a small number of black spots; and eventually the bananas become undesirably over-ripe.

When the length of time of the shipment is too long, bananas often fail to ripen properly. In many cases, after a long shipment process, some of the bananas undesirably ripen during shipment, and/or some of the bananas undergo undesirable processes instead of ripening properly. In some cases, if the bananas are packed in certain types of bags, the bananas may ferment, which is undesirable.

WO 2011/082059 describes a method of handling bananas that involves exposing the bananas to ethylene, exposing the bananas to a cyclopropene compound, and having the bananas in a modified-atmosphere package. WO 2009/032169 describes an enclosure comprising a polymeric film and a method to control banana or plantain quality by providing packaging in laser micro-perforated plastic bags.

It is desired to provide an enclosure that allows bananas to endure relatively long shipment processes and still ripen properly at their destination. Also desired is a method of handling bananas that includes a relatively long shipment time and that allows bananas to ripen properly at their destination.

The following is a statement of the invention.

In a first aspect of the present invention, there is provided an enclosure comprising a polymeric film; wherein said polymeric film comprises one or more copolymers of ethylene with a polar monomer; wherein the volume of said enclosure is 250 liters to 500 liters; wherein the oxygen transmission rate of said enclosure is 8,000 to 16,000 cm³/hour; and wherein the enclosure comprises between 1688 and 2195 perforations, and wherein the perforations are spaced between 5 to 6.5 mm apart.

In a second aspect of the present invention, there is provided a method of handling bananas comprising (a) harvesting green bananas; (b) then placing said green bananas into the enclosure of the first aspect; (c) then storing said enclosure at 13 to 20°C for 1 week or longer; (d) then ripening said bananas or allowing said bananas to ripen.

The following is a detailed description of the present invention.

As used herein, "banana" refers to any member of the genus *Musa,* including, for example, bananas and plantains.

When a compound is described herein as being present as a gas in an atmosphere at a certain concentration using the unit "ppm," the concentration is given as parts by volume of that compound per million *parts* by volume of the atmosphere. Similarly, "ppb" denotes parts by volume of that compound per billion parts by volume of the atmosphere.

As used herein, a "polymeric film" is an object made of polymer that is much smaller in one dimension (the "thickness") than in the other two dimensions and that has a relatively uniform thickness. Polymeric film typically has thickness of 1 mm or less.

A "polymer," as used herein, is a relatively large molecule made up of repeated units of the reaction products of monomers. Polymers may have a single type of repeat unit ("homopolymers") or they may have more than one type of repeat unit ("copolymers"). Copolymers may have the various types of repeat units arranged randomly, in sequence, in blocks, in other arrangements, or in any mixture or combination thereof.

As used herein, a "monomer" is a compound that has one or more carbon-carbon double bond that is capable of participating in a polymerization reaction. As used herein, an "olefin monomer" is a monomer, the molecules of which contain only atoms of carbon and hydrogen. As used herein, "polar monomer" is a monomer, the molecules of which contain one or more polar group. Polar groups include, for example, hydroxyl, thiol, carbonyl, carbon-sulfur double bond, carboxyl, sulfonic acid, ester linkages, other polar groups, and combinations thereof. As used herein, when a monomer is reacted with other monomers to form a polymer, the residue of that monomer in the resulting polymer is the "polymerized unit" of that monomer.

The present invention optionally involves the use of one or more cyclopropene compound. As used herein a cyclopropene compound is any compound with the formula 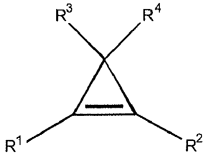 where each R¹, R², R³ and R⁴ is independently selected from the group consisting of H and a substituted or unsubstituted hydrocarbon group. Independently, in any one R group the total number of non-hydrogen atoms is 50 or less.

As used herein, a chemical group of interest is said to be "substituted" if one or more hydrogen atoms of the chemical group of interest is replaced by a substituent. Suitable substituents include, for example, alkyl, alkenyl, acetylamino, alkoxy, alkoxyalkoxy, alkoxycarbonyl, alkoxyimino, carboxy, halo, haloalkoxy, hydroxy, alkylsulfonyl, alkylthio, trialkylsilyl, dialkylamino, and combinations thereof.

Preferred R¹, R², R³ and R⁴ groups are, for example, substituted and unsubstituted versions of any one of the following groups: aliphatic, aliphatic-oxy, alkylcarbonyl, aryl, and hydrogen. More preferred are unsubstituted alkyl and hydrogen.

In preferred embodiments, one or more cyclopropenes are used in which R², R³ and R⁴ are hydrogen. In preferred embodiments, R¹ is substituted or unsubstituted (C1-C8) alkyl. In more preferred embodiments, R¹ is methyl and each of R², R³, and R⁴ is hydrogen, and the cyclopropene compound is known herein as "1-MCP."

As used herein, "normal atmosphere" is the natural outdoor atmosphere. "Normal atmospheric composition" is the composition of the normal atmosphere. As used herein, "modified-atmosphere package" ("MAP") is an enclosure that alters the gaseous atmosphere inside the enclosure from normal atmospheric composition when respiring produce is contained inside the enclosure. MAP may or may not allow exchange of gas with the ambient atmosphere outside the MAP. MAP may or may not be permeable to diffusion of any particular gas, independent of its permeability or non-permeability to any other gas.

The enclosure of the present invention is preferably capable of acting as an MAP. Preferably, the enclosure of the present invention is capable of acting as an MAP for bananas.

The enclosure of the present invention preferably takes advantage of the fact that bananas respire after harvest. Thus bananas placed in an enclosure, among other processes, consume oxygen and produce carbon dioxide. The enclosure can be designed so that diffusion through the solid exterior surfaces of the enclosure and passage of gas through any perforations that may be present in the exterior surface of the enclosure maintain desirable levels of oxygen, carbon dioxide, and optionally other gases (such as, for example, water vapor or ethylene or both).

One useful way to characterize the enclosure is the gas transmission rate of the enclosure itself. Preferably, the rate of transmission of carbon dioxide is, in units of cubic centimeters per hour, 5,000 or higher; more preferably 7,000 or higher; more preferably 10,000 or higher. Preferably, the rate of transmission of carbon dioxide is, in units of cubic centimeters per hour, 100,000 or lower; more preferably 50,000 or lower.

The rate of transmission of oxygen for the enclosure itself is, in units of cubic centimeters per hour, 8,000 to 16,000.

It is useful to characterize the inherent gas transmission characteristics of a polymeric film. By "inherent" it is meant the properties of the film itself, in the absence of any perforations or other alterations. It is useful to characterize the composition of a film by characterizing the gas transmission characteristics of a film that has that composition and that is 25.4 micrometers thick. It is contemplated that, if a film of interest were made and tested at a thickness that was different from 25.4 micrometers (e.g., from 20 to 40 micrometers), it would be easy for a person of ordinary skill to accurately calculate the gas transmission characteristics of a film having the same composition and having thickness of 25.4 micrometers. The gas transmission rate of a film having thickness 25.4 micrometers is labeled "GT-25.4" herein.

Preferred are film compositions for which the GT-25.4 for carbon dioxide at 23°C, in units of cm³/(m²-day), is 800 or higher; more preferred is 4,000 or higher; more preferred is 5,000 or higher; more preferred is 10,000 or higher; more preferred is 20,000 or higher. Preferred are films with GT-25.4 for carbon dioxide at 23°C, in units of cm³/(m²-day), of 150,000 or lower; more preferred is 80,000 or lower; more preferred is 60,000 or lower. Preferred are films with GT-25.4 for oxygen at 23°C, in units of cm³/(m²-day), of 200 or higher; more preferred is 1,000 or higher; more preferred is 3,000 or higher; more preferred is 5,000 or higher. Preferred are films with GT-25.4 for oxygen at 23°C, in units of cm³/(m²-day), of 150,000 or lower; more preferred is 80,000 or lower; more preferred is 60,000 or lower; more preferred is 40,000 or lower; more preferred is 20,000 or lower. Preferred are films with GT-25.4 for water vapor at 37.8°C, in units of g/(m²-day), of 10 or higher; more preferred is 20 or higher. Preferred are films with GT-25.4 for water vapor at 37.8°C, in units of g/(m²-day), of 330 or lower; more preferred is 150 or lower; more preferred is 100 or lower; more preferred is 55 or lower; more preferred is 45 or lower; more preferred is 35 or lower.

One useful inherent characteristic of a polymeric film composition is herein called "film beta ratio," which is the quotient that is calculated by dividing the GT-25.4 for carbon dioxide gas transmission rate by the GT-25.4 for oxygen gas. Preferred enclosure is made of material that has film beta ratio of 1 or higher; more preferably 2 or higher. Preferred enclosure is made of material that has film beta ratio of 15 or less; more preferably 10 or less.

In preferred embodiments, some or all of the exterior surface of the enclosure of the present invention is polymeric. Preferably, the polymer is in the form of a polymeric film. Preferred polymeric films have average thickness of 5 micrometer or more; more preferably 10 micrometer or more; more preferably 20 micrometer or more. Independently, some suitable polymeric films have average thickness of 300 micrometers or less; more preferably 200 micrometer or less; more preferably 100 micrometer or less; more preferably 50 micrometer or less.

Polymer compositions of the present invention contain one or more copolymers of an olefin monomer with a polar monomer (herein called "copolymer (I)"). Suitable copolymers of an olefin monomer with a polar monomer include, for example, such polymers available from DuPont called Elvax™ resins. Preferred are copolymers of ethylene with one or more polar monomer. Preferred polar monomers are vinyl acetate, methyl acrylate, ethyl acrylate, butyl acrylate, acrylic acid, methacrylic acid, and mixtures thereof. Preferred polar monomers contain one or more ester linkage; more preferred is vinyl acetate. Among copolymers of ethylene with one or more polar monomer, the preferred amount of polar monomer is, by weight based on the weight of the copolymer, 1% or more; more preferably 2% or more; more preferably 5% or more. Among copolymers of ethylene with one or more polar monomer, the preferred amount of polar monomer is, by weight based on the weight of the copolymer, 25% or less; more preferably 20% or less; more preferably 15% or less.

In addition to copolymer (I), the polymeric composition of the present invention contains one or more additional polymer (herein called polymer "(II)"). Some suitable polymer compositions include, for example, polyolefins, polyvinyls, polystyrenes, polydienes, polysiloxanes, polyamides, vinylidene chloride polymers, vinyl chloride polymers, copolymers thereof, blends thereof, and laminations thereof. Suitable polyolefins include, for example, polyethylenes, polypropylenes, copolymers thereof, blends thereof, and laminations thereof. Suitable polyethylenes include, for example, low density polyethylene, ultralow density polyethylene, linear low density polyethylene, metallocene-catalyzed polyethylene, copolymers of ethylene with polar monomers, medium density polyethylene, high density polyethylene, copolymers thereof and blends thereof. Suitable polypropylenes include, for example, polypropylene and oriented polypropylene. In some embodiments, low density polyethylene is used. In some embodiments, copolymer of styrene and butadiene is used. Preferred are polyolefins; more preferred are polyethylenes; more preferred are metallocene-catalyzed polyethylenes.

Preferably, the amount of copolymer (I), by weight based on the weight of the sum of copolymer (I) and polymer (II), is 10% or more; more preferably 14% or more. Preferably, the amount of copolymer (I), by weight based on the weight of the sum of copolymer (I) and polymer (II), is 28% or less; more preferably 25% or less.

Preferably, the amount of the sum of the weight of copolymer (I) and the weight of polymer (II) is, based on the total weight of the polymeric film, 75% or more; more preferably 85% or more.

It is useful to characterize the weight of polymerized units of polar monomer in copolymer (I) as a percentage of the total weight of the polymeric film. Preferably, the amount of polymerized units of polar monomer in copolymer (I) is, by weight based on the weight of the polymeric film is 0.05% or higher; more preferably 0.2% or higher; more preferably 0.8% or higher; more preferably 1% or higher. Preferably, the amount of polymerized units of polar monomer in copolymer (I) is, by weight based on the weight of the polymeric film, 18% or less; more preferably 10% or less; more preferably 4% or less; more preferably 3% or less.

When it is stated herein that an enclosure comprises polymeric film, it is meant that some or all of the surface area of the enclosure consists of polymeric film, and the film is arranged so that molecules that are capable of diffusing through the polymeric film will diffuse between the inside of the enclosure and the outside of the enclosure in both directions.

Preferably, polymeric film is used that has perforations. Preferably, the holes have mean diameter of 5 micrometers to 500 micrometers. Preferably, the holes have mean diameter of 10 micrometers or more; more preferably 20 micrometers or more; more preferably 50 micrometers or more; more preferably 100 micrometers or more. Independently, preferably, the holes have mean diameter 300 micrometers or less; more preferably 200 micrometers or less. If a hole is not circular, the diameter of the hole is considered herein to be the diameter of an imaginary circle that has the same area as the actual hole.

In preferred embodiments, the number of holes in the enclosure is 200 or more; more preferably 500 or more; more preferably 1,000 or more; more preferably 1,200 or more. In preferred embodiments, the number of holes in the enclosure is 8,000 or fewer; more preferably 4,000 or fewer; more preferably 3,000 or fewer.

The preferred total area of the holes in the enclosure, in units of square micrometer, is 1 million or more; more preferably 5 million or more; more preferably 10 million or more. The preferred total area of the holes in the enclosure, in units of square micrometer, is 80 million or less; more preferably 35 million or less; more preferably 25 million or less.

The enclosure of the present invention comprises polymeric film, and the percent of the surface area of the enclosure that consists of the polymeric film is 10% to 100%; more preferably 50% to 100%; more preferably 75% to 100%; more preferably 90% to 100%. An enclosure in which 90% to 100% of the surface area consists of polymeric film is known herein as a "bag." Preferred are enclosures that comprise polymeric film and in which all portions of the surface of the enclosure that is not polymeric film effectively block diffusion of gas molecules.

Holes in polymeric film may be made by any method. Suitable methods include, for example, laser perforation, hot needles, flame, low-energy electrical discharge, and high-energy electrical discharge. One preferred method is laser perforation. Among embodiments in which laser perforation is used, it is preferred to design or select polymeric film that is well suited to laser perforation. That is, the polymeric film is designed or selected so that the laser easily makes holes that are round and have predictable size. Preferred laser is a carbon dioxide laser. For different polymeric film compositions, the appropriate wavelength of laser light may be chosen. For polymeric films that contain polyethylene and/or copolymers of ethylene with one or more polar monomer, it is preferred to choose a carbon dioxide laser producing infrared light that includes infrared light of wavelength 10.6 micrometer.

Preferably, the polymeric film of the present invention is a single-layer film. That is, if the polymeric film contains more than one polymer, the polymers contained in the polymeric film are preferably blended homogeneously, without layers or domains having distinct polymer compositions.

The enclosure of the present invention has volume of 250 liters to 500 liters. The volume of the enclosure is considered to be the volume that is available for containing produce when the bag has been shut.

Preferably, the enclosure of the present invention is a tube made of polymeric film; one end of the tube (herein the "bottom end") is permanently sealed; and the other end (herein the "open end") is capable of being gathered together to form a seal. Preferably, such a tube has no gussets.

It is useful to define "zones" of an enclosure of the present invention. To determine the zones, the open end is gathered together to form a seal, and the enclosure is suspended vertically from the seal. A horizontal plane is imagined that intersects the enclosure somewhere between the seal and the bottom end. The portion of the enclosure between the horizontal plane and the seal is the top zone; the portion of the enclosure between the bottom end and the horizontal plane is the bottom zone.

Preferably, the horizontal plane is located so that the ratio of the surface area of the top zone to the surface area of the bottom zone is 2:1 or 1:1 or 0.5:1. More preferably, the horizontal plane is located so that the ratio of the surface area of the top zone to the surface area of the bottom zone is 2:1.

Within each zone, the perforation density is defined herein as the total area of the perforations in that zone divided by the total surface area of the enclosure in that zone. Preferably, the ratio of the perforation density of the bottom zone to the perforation density of the top zone is 0.9:1 or higher; more preferably 0.95:1 or higher; more preferably 0.99:1 or higher. Preferably, the ratio of the perforation density of the bottom zone to the perforation density of the top zone is 1.1:1 or lower; more preferably 1.05:1 or lower; more preferably 1.01:1 or lower. Most preferably, the ratio of the perforation density of the bottom zone to the perforation density of the top zone is 1:1.

Preferably, bananas are placed into the enclosure of the present invention. Preferably, after the bananas are placed into the enclosure, the opening through which the bananas were conveyed into the opening is sealed, and then the enclosure has the gas transmission properties described herein above.

Preferably, the amount of bananas in the enclosure is 4 kg or more; more preferably 8 kg or more; more preferably 10 kg or more; more preferably 12 kg or more; more preferably 14 kg or more. Preferably, the amount of bananas in the enclosure is 30 kg or less; more preferably 25 kg or less; more preferably 22 kg or less; more preferably 20 kg or less.

The method of the present invention preferably involves contacting bananas with ethylene.

The preferred temperature for performing exposure of bananas to ethylene is 13.3°C or higher; more preferably 14°C or higher. The preferred temperature for performing exposure to ethylene is 18.3°C or lower.

Preferably, among embodiments in which gaseous ethylene contacts the bananas, the bananas are inside an enclosure of the present invention, and ethylene is introduced into the atmosphere outside the enclosure. In such embodiments, the enclosure encloses one or more bananas and allows some contact between the ethylene and the bananas, for example by allowing some ethylene to diffuse through the enclosure, by allowing some ethylene to diffuse through holes in the enclosure, or by a combination thereof.

Preferably, one or more enclosure of the present invention encloses bananas and is placed into a larger container; and ethylene is introduced into the atmosphere of that larger container. The preferred concentration of ethylene in the atmosphere inside the larger container is 20 ppm or higher; more preferably 50 ppm or higher; more preferably 100 ppm or higher. The preferred concentration of ethylene in the atmosphere inside the larger container is 1,000 ppm or less; or 500 ppm or less; or 300 ppm or less.

The preferred duration of the exposure of bananas to an atmosphere that contains ethylene is 8 hours or more; more preferably 16 hours or more; more preferably 20 hours or more. The preferred duration of the exposure of bananas to an atmosphere that contains ethylene is 48 hours or less; more preferably 36 hours or less; more preferably 24 hours or less.

Preferably, bananas are enclosed in an enclosure of the present invention, and while the bananas are so enclosed, the bananas are subjected to a ripening cycle, as follows. The enclosure of the present invention is stored in a normal atmosphere at 18°C or lower for one day or more subsequent to the end of exposure to an atmosphere that contains ethylene. In a preferred ripening cycle, an enclosure of the present invention that encloses bananas is exposed to an atmosphere containing ethylene for 20-28 hours at 13.3°C to 18.3°C; the enclosure of the present invention is then kept in a normal atmosphere at the same temperature for 20-28 hours; and the enclosure of the present invention is then stored in a normal atmosphere at 13.3°C to 20°C for a period of 1 to 6 days.

Preferably, subsequent to exposure to ethylene, bananas are exposed to a cyclopropene compound. Among embodiments in which bananas are exposed to a cyclopropene compound, preferable are those in which the bananas are enclosed in an enclosure of the present invention and in which that enclosure is exposed to an atmosphere that contains one or more cyclopropene compound. Such exposure may be performed by any method. For example, an enclosure of the present invention that encloses bananas may be placed into a larger container, and molecules of one or more cyclopropene compound may be introduced into the atmosphere of the larger container.

When a cyclopropene compound is used, preferably the concentration of cyclopropene compound in the atmosphere is 0.5 ppb or higher; more preferably is 1 ppb or higher; more preferably is 10 ppb or higher; more preferably 100 ppb or higher. Preferably, the concentration of cyclopropene compound is 100 ppm or lower, more preferably 50 ppm or lower, more preferably 10 ppm or lower, more preferably 5 ppm or lower.

In preferred embodiments of the present invention, bananas are harvested when they are green. Preferably, bananas are harvested at 11 to 14 weeks of age.

Preferably, bananas are harvested and immediately placed into one or more enclosure of the present invention. Preferably, the time from harvest to placement into the enclosure is 14 days or less, more preferably 7 days or less, more preferably 2 days or less. Preferably, harvested bananas are placed into the enclosure prior to shipment, and the harvested bananas remain in the enclosure during shipment. Preferably, bananas are shipped to a destination that is near the intended point of sale to consumers. As used herein, "near the intended point of sale to consumers" means a location from which it is capable to transport the bananas to the point of sale to consumers in 5 days or fewer by truck or other surface transportation.

Preferably, bananas are placed into an enclosure of the present invention after harvest and prior to shipment. In some of such embodiments, the enclosure may be placed in a carrying device. The carrying device provides some structure for ease of carrying the enclosure and for strength in stacking the carrying devices during transportation. Carrying devices allow free exchange of gas between the inside and the outside of the carrying device. A typical suitable carrying device is, for example, a cardboard box with large holes (for example, round holes with diameter 20 mm or greater). In some embodiments, bananas are shipped in an enclosure that is in a carrying device to a destination near the intended place of sale to consumers.

Preferably, bananas are contacted with ethylene while they are in an enclosure of the present invention. More preferably, while the bananas are in that same enclosure, they are subsequently contacted with a cyclopropene compound.

In preferred embodiments, bananas are processed as follows. Preferably, bananas are exposed to ethylene and then are allowed to ripen until their color rating is 2 to 6 on the 7-stage scale (as defined herein below); more preferably, those bananas are then exposed to a cyclopropene compound. More preferred is exposing bananas to a cyclopropene compound when the bananas have color rating of 2.5 or higher. More preferred is exposing bananas to a cyclopropene compound when the bananas have color rating of 5.5 or lower; more preferred when the bananas have color rating of 4.5 or lower; more preferred when the bananas have color rating of 3.5 or lower.

In preferred embodiments of the present invention, bananas are exposed to a cyclopropene compound. Subsequent to that exposure to a cyclopropene compound, the bananas are preferably kept in an enclosure of the present invention for 11 hours or more; more preferably 23 hours or more; more preferably 47 hours or more; more preferably by 71 hours or more.

It is contemplated that preferred enclosure is chosen or designed so that, when bananas are placed into the enclosure and the enclosure, with the bananas inside, is then exposed ethylene and exposed to a cyclopropene compound, and then stored for 10 days at 13.3°C to 22.0°C, a certain preferred atmosphere will be present in the enclosure. In that preferred atmosphere, the amount of carbon dioxide, by volume based on the volume of the atmosphere inside the enclosure, is 7% or more; more preferably 8% or more. In that preferred atmosphere, the amount of carbon dioxide, by volume based on the volume of the atmosphere inside the enclosure, is 21% or less; more preferably 19% or less. In that preferred atmosphere, the amount of oxygen, by volume based on the volume of the atmosphere inside the enclosure, is 4% or more; more preferably 5% or more. In that preferred atmosphere, the amount of oxygen, by volume based on the volume of the atmosphere inside the enclosure, is 13% or less; more preferably 12.5% or less.

The following are examples of the present invention.

Each cluster of bananas was rated daily for sugar spots. Clusters were rated using the following scale:
0 = no spots; 1 = few spots; 2 = moderate spots; 3 = severe spots
Clusters with rating of 0-1 are commercially desirable to consumers. Clusters with ratings of 2-3 are unacceptable to consumers. In the results below, the average rating for all the clusters in a given treatment group is reported.

The color of banana peels is rated according to a seven stage rating scale: stage 1 (dark green); stage 2 (all light green); stage 3 (half green and half yellow); stage 4 (more yellow than green); stage 5 (green tips and necks); stage 6 (all yellow; maybe light green necks, no green tips); stage 7 (yellow flecked with brown). Consumers generally prefer to eat bananas in stage 5 or stage 6.

Firmness was measured using TA-XT2 Texture Analyzer (Stable Micro Systems) with a 5 mm diameter stainless steel cylinder probe. The probe was set to penetrate up to 11 mm into the banana which represents about 75% of the height of the samples with test speed of 1 mm/s and trigger force of 0.05 N. The instrument was calibrated with a 5 kg weight. The Banana was peeled, cut at the center (10 cm) and placed below the stainless steel probe. The maximum force (N) required to overcome the resistance of banana pulp and puncture the fruit was taken as the firmness of the banana.

The materials used in the following Examples were these:
i) m-PE = ELITE™ 5400G, Enhanced Polyethylene resin (metallocene polyethylene) available from The Dow Chemical Company
ii) EVA1 = ELVAX™ 3130 resin (DuPont Co.), Ethylene/Vinyl Acetate resin with 12% vinyl acetate by weight, based on the weight of the EVA,
iii) EVA2 = Westlake EB502AA, ethylene-vinyl acetate copolymer, with 12.5% vinyl acetate by weight, based on the weight of the EVA, available from Westlake Chemical
iv) 101797 =masterbatch available from Ampacet which contains 5% slip aid (by weight based on the weight of the 101797) Stearamide in a LDPE base resin
v) 10063 = masterbatch also available from Ampacet which contains 20% (by weight based on the weight of the 10063) diatomaceous earth in an 8 MI LDPE base resin.

The MAP bags used in the following Examples were made by producing bags on a roll of dimensions 36" width by 60" or 65" length, then perforating those bags on a roll. The film for the tube was extruded film that was blown to produce film of thickness 29.5 micrometer (1.16 mil). The tubes were cut to desired length and then sealed on one end to make a bag. Bags of two different compositions were used interchangeably. The two compositions were as follows: (weight percentages based on the weight of the composition).

| **Composition** | **m-PE** | **EVA1** | **EVA2** | **101797** | **10063** |
|---|---|---|---|---|---|
| "S" | 55 | 34 | 0 | 6 | 5 |
| "B2" | 69 | 0 | 20 | 6 | 5 |

It is contemplated that there are only small differences in the inherent gas transmission characteristics between compositions "S" and "B2." Further, it is contemplated that the differences in gas transmission caused by different amounts of perforation were much larger than any differences caused by variation in composition. That is, it is contemplated that in the experiments reported below, the performance of the various bags is due to the number of perforations in the bag and not due to any difference in composition between "S" bags and "B2" bags.

Properties of the film used in making the bags were as follows:

| Test | Method⁽²⁾ | Bag S | Bag B2 |
|---|---|---|---|
| Thickness micrometer (mil) | ASTM D374 | 21.6 (0.85) | 26.9 (1.06) |
| Haze, % | ASTM D1003 | 17.2 | 14.1 |
| Clarity, % | ASTM D1746 | 77.6 | 82.1 |
| 1% Secant Modulus, MD, MPa (psi) | ASTM D882 | 125 (18,140) | 116 (16,760) |
| 1% Secant Modulus, TD, MPa (psi) | ASTM D882 | 160 (23,270) | 136 (19,735) |
| Tensile Toughness, MD, MPa (psi) | ASTM D882 | 40.7 (5910) | 41.1 5965 |
| Tensile Toughness, TD, MPa (psi) | ASTM D882 | 57.1 (8290) | 56.0 (8120) |
| Elmendorf Tear, MD, g/ 25 micrometer (g/mil) | ASTM D1922 | 36 | 115 |
| Elmendorf Tear, TD, g/25 micrometer (g/mil) | ASTM D1922 | 619 | 553 |
| carbon dioxide transmission at 100% MOCON PERMATRAN-C™ 4/41 23°C cm³/(m²-day) | ASTM F2476 | 2766 | 2537 |
| oxygen transmission at 100% MOCON OX-TRAN 23.1°C cm³/(m²-day) | ASTM D3985 | 491 | 474 |
| water transmission rate MOCON PERMATRAN-W WVTR 37.8°C ambient g/(m²-day) | ASTM D1249 | 2.17 | 1.81 |

| | | | |
|---|---|---|---|
| Note (2): ASTM methods are published by the American Society for Testing and Materials, West Conshohocken, PA, USA. | | | |

The film was drilled with a beam compression laser processing system, and the resulting holes had a machine direction average size of 109 microns and a transverse direction average size of 104 microns. Bags had various numbers of holes as described below.

### Example 1: Oxygen Transmission Rate

A variety of bags was made as described above. Width was 91.4 cm, and length was 152.4 or 165.1 cm. Some bags (labeled "none") had no perforations. Other bags had perforations arranged by varying perforation spacing between 1 mm and 22 mm and thereby the number of perforations per bag between 499 and 5486.

The oxygen transmission rate of the entire bag was measured using the whole bag method, as follows. The bag was supported on a tent frame of known volume, purged with nitrogen so that the oxygen content was less than 1%, and then the concentration of oxygen was measured versus time. The rate of oxygen transmission for the system was calculated by plotting the natural log of the oxygen concentration gradient versus time as discussed by Ghosh and Anantheswaran. [Ghosh, V. and Anantheswaran, R.C. 2001. Oxygen transmission rate through micro-perforated films; measurement and model comparison. Journal of Food Process Engineering. Vol. 24. pp 113-133.]

Results were as follows:

| **Spacing (mm)** | **Total Perforations** | **OTR⁽¹⁾** |
|---|---|---|
| 2 | 5486 | 32574 |
| 3 | 3658 | 20888 |
| 4 | 2,743 | 17266 |
| 5* | 2195 | 14916 |
| 5.5* | 1995 | 13593 |
| 6* | 1829 | 11721 |
| 6.5* | 1688 | 10916 |
| 8.5 | 1291 | 9112 |
| 9.5 | 1155 | 8408 |
| 11 | 998 | 6857 |
| 22 | 499 | 4067 |
| none | none | 1064 |

| | | |
|---|---|---|
| Note (1): Oxygen Transmission Rate of the entire bag (cubic centimeter per hour). Note (*): Bags having 5, 5.5, 6, and 6.5 mm spacings fall within the present invention. The other bags are comparative. | | |

### Example 2: Handling of Bananas

Bananas were harvested in Guatemala at 11-12 weeks growth. Within 3 days of harvest, bananas were placed into bags and put into storage at 14.4°C. Each bag held 18 kg of bananas. The bags tested were the bags listed in Example 1, plus Banavac ("BV") bags (commercially available polyethylene bags with no perforations). No steps were taken to remove gas from any bag or to introduce any gas into any bag (other than changes in atmosphere inside the bags caused by placing bananas into the bags and changes in atmosphere inside the bags caused by diffusion through the enclosures). All bags remained closed from the time bananas were placed into the bags until the bananas were removed on day 42 for evaluation, except that half the Banavac bags were opened during ripening on day 31 and remained open for the period of study, while the rest of the Banavac bags remained closed until evaluations on day 42.

Bags were packed with bananas as follows, giving a top layer and a bottom layer. A layer of kraft paper was placed on the bottom of the box; on top of that, the open bag was placed. Two rows of fruit were placed in the center of the bag along the length of the box. The kraft layer was pulled up and over the bananas, along with the bag, with the edges overlapping to cover the fruit, forming the bottom layer. The bags were then folded over the kraft paper, forming pockets to hold the top layer fruits. Two rows of top layer fruit were arranged on either side of the box. The bag was then pulled closed above the top layers of fruit; twisted shut; and then held closed using a goose neck closure held by a rubber band; a tape closure; or some other appropriate closure device.

Subsequent handling was as follows.

| **Step** | **Completed on Day** |
|---|---|
| Bananas placed into bags and then put into storage at 14.4 °C | 0 |
| Shipment by boat at 14.4 °C to Pennsylvania, USA | 27 |
| Ripening Cycle | 31 |
| Exposure to 1-MCP (1,000) | 34 |
| Storage at 25°C | 42 |

The ripening cycle was conducted as follows: All fruits were ripened in a fully loaded and leak test qualified commercial room. The fruits, while in the boxes as described above, were ripened in a 5 day ripening cycle, as follows. The temperatures shown are pulp temperatures; if necessary, the thermostat was lowered so that pulp temperature remained at the desired temperature despite any respiration that may be taking place in the bananas.
Day 26: 17.8°C (64°F), in normal air
Day 27: 17.8°C (64°F), ethylene at 200 ppm for 24 hours
Day 28: 17.8°C (64°F), room was vented for 30 minutes, and then re-sealed.
Day 29: 17.8°C (58°F)
Day 30: 14.4°C (58°F)
Day 31: 14.4°C (58°F)

The fruits were initially conditioned overnight at 15.5-17.7 °C prior to ethylene treatment. Gassing with ethylene (1000 ppb) was carried out for 24 hours to trigger ripening. The pulp temperatures were then raised to 17.7-18.3 °C before gradually bringing them down to 13.3-14.4 °C holding range.

Exposure to 1-MCP was conducted on the boxes containing bananas as follows: Treatment with 1000 ppb 1-MCP was carried out in the commercial room for 12 hours when the fruits were at color stage between 2.5 and 3.0. After treatment the fruits were held (including untreated control) at room temperature (approximately 20-22 °C).

On Day 42, the bananas were evaluated.

Any bags that had been torn were ignored. Only the bananas from intact bags were evaluated. The results were as follows.

### Observations

| **Spacing (mm)** | **Observations** |
|---|---|
| 1 | Fruit ripened on arrival and sugar spotted |
| 2 | Sweet and Firm. Fruit sugar spotted. Color Variability within each bag. |
| 3 | Sweet and Firm. Fruit sugar spotted. Color Variability within each bag. |
| 4 | Sweet and Firm. Fruit sugar spotted. Color Variability within each bag. |
| 5* | Less sweet and firm than bags with 5.5, 6, and 6.5 mm. |
| 5.5* | Very sweet and firm. |
| 6* | Very sweet and firm. |
| 6.5* | Very sweet and firm. |
| 8.5 | Top layer tasted not sweet. Alcohol flavor in bottom layer. |
| 9.5 | Top layer tasted not sweet. Alcohol flavor in bottom layer. |
| 11 | Top layer tasted not sweet. Alcohol flavor in bottom layer. |
| 22 | High alcohol flavor and bitter aftertaste. |
| no perforations | Fruits did not ripen. Distinct "off" flavor. |
| BV-closed | Fruits did not ripen. Distinct "off" flavor. |
| BV-open | Distinct "off" flavor. |

| | |
|---|---|
| Note (*): Bags having 5, 5.5, 6, and 6.5 mm spacings fall within the present invention. The other bags are comparative. | |

Only the bags with spacings of 5, 5.5, 6, and 6.5 had acceptable uniformity, appearance, and taste.

### Test Results

| **Spacing (mm)** | **Sugar⁽²⁾ Top** | **Sugar⁽²⁾ Bottom** | **Color⁽³⁾ Top** | **Color⁽³⁾ Bottom** | **Color Diff⁽⁴⁾** | **Firm⁽⁵⁾ Top** | **Firm⁽⁵⁾ Bottom** |
|---|---|---|---|---|---|---|---|
| 2 | 3 | 2.5 | 6.5 | 6.8 | 0.3 | 1.62 | 1.61 |
| 3 | 2 | 2 | 4.5 | 5.5 | 1.0 | 1.40 | 1.40 |
| 4 | 1 | 0.1 | 5.0 | 5.5 | 0.5 | 1.67 | 1.66 |
| 5* | 0.1 | 1 | 5.5 | 5.5 | 0 | 1.66 | 1.41 |
| 5.5* | 0.1 | 0.1 | 5.25 | 5.25 | 0 | 1.71 | 1.77 |
| 6* | 0.1 | 0.1 | 5.0 | 5.0 | 0 | 1.82 | 1.96 |
| 6.5* | 0.5 | 0.1 | 5.0 | 5.0 | 0 | 1.63 | 1.82 |
| 8.5 | 0.1 | 0.1 | 4.5 | 5.5 | 0 | 1.82 | 1.65 |
| 9.5 | 0.1 | 0.1 | 5.0 | 5.5 | 0.5 | 1.76 | 1.83 |
| 11 | 1 | 0.1 | 4.5 | 5.5 | 1.0 | 1.75 | 1.71 |
| 22 | 1 | 0.1 | 4.5 | 5.0 | 0.5 | 1.75 | 2.13 |
| none | 0.1 | 0.1 | 3.0 | 3.5 | 0.5 | 2.17 | 2.18 |
| BV-closed | 0.1 | 0.1 | 3.0 | 2.5 | -0.5 | 1.61 | 2.14 |
| BV-open | 0.5 | 0.1 | 5.0 | 4.5 | -0.5 | 1.27 | 2.19 |

| | | | | | | | |
|---|---|---|---|---|---|---|---|
| Note (*): Bags having 5, 5.5, 6, and 6.5 mm spacings fall within the present invention. The other bags are comparative. Note (2): Sugar Spot Rating Note (3): Color Stage Note (4): Difference: (Color Bottom) - (Color Top) Note (5): Firmness (Newton) | | | | | | | |

Bags with spacings of 2 and 3 mm showed unacceptable sugar spots. All others were acceptable. Bags with spacing of 2 mm had too-high color ratings. Bags with no perforations and BV-closed bags had too-low color ratings. The only bags with good color scale and with zero color difference between the top layer and the bottom layer were those with spacings of 5, 5.5, 6, and 6.5. The bags having spacings of 4 mm to 11 mm had acceptable firmness; the other bags had firmness that was either too high or too low.

### Comparative Example: Bag "D-40" reported in WO 2011/082059.

D-40 was a gusseted bag made from a 7-layer film.

The gas transmission rate for the entire D-40 bag was found by measuring the gas transmission rates for a portion of the perforated film and then making a calculation based on the entire effective area of the bag. Gas transmission rates for the perforated films were measured using quasi-isostatic method as described by Lee et al. (Lee, D. S., Yam, K. L., Piergiovanni, L. "Permeation of gas and vapor," Food Packaging Science and Technology, CRC Press, New York, NY, 2008, pp 100 - 101).

The oxygen transmission rate for the entire bag determined for the D-40 bag was 17,632 cubic centimeter per hour.

Bananas were harvested and packed using D-40 bags as follows: First, macro-perforated kraft paper was placed inside the cardboard box, as in conventional packing. The D-40 bag was then placed onto the kraft paper with the seam of the bag centered and running along the length of the box, lining the cardboard box bottom and internal walls. The bag's upper length excess was folded over the box top edges. Two rows of fruit were placed with care in the bottom portion of the bag. The kraft paper was then folded over the fruit with the bag lining the kraft paper and then two layers of fruit were placed in the top pockets. Once four rows of fruit are placed in the bag, the bag's upper length excess is twisted together, folded, and tightly twist-tied with a rubber band or sticky tape.

The following undesirable effects were observed: Due to low puncture resistance and tensile strength the bag was unable to withstand the shock and vibration impacts during transit and handling. The crown of the fruit in the top layer pierced through the bag, tearing the bag and thereby compromising the modified atmosphere of the bag. This resulted in early turn and ripening in the fruit during transit and also non-uniform ripening issues on arrival.

## Claims

1. An enclosure comprising:
a polymeric film; wherein said polymeric film comprises one or more copolymers of ethylene with a polar monomer;
wherein the volume of said enclosure is 250 liters to 500 liters;
wherein the oxygen transmission rate of said enclosure is 8,000 to 16,000 cm³/hour; and
wherein the enclosure comprises between 1688 and 2195 perforations, and
wherein the perforations are spaced between 5 to 6.5 mm apart.

2. The enclosure of claim 1, wherein said polymeric film further comprises one or more olefin polymer.

3. The enclosure of claim 1, wherein said polar monomer is vinyl acetate.

4. The enclosure of claim 1, wherein the amount of polymerized units of said polar monomer is 0.05% to 18% by weight, based on the weight of said polymeric film.

5. The enclosure of claim 1, wherein said polymeric film is a single-layer film.

6. A method of handling bananas comprising:
(a) harvesting green bananas;
(b) then placing said green bananas into the enclosure of claim 1;
(c) then storing said enclosure at 20°C or lower for 1 week or longer;
(d) then ripening said bananas or allowing said bananas to ripen.

7. The method of claim 6, wherein the duration of said step (b) is 2 weeks or longer.

8. The method of claim 6, wherein said step (d) comprises exposing said enclosure to an atmosphere that contains ethylene.

9. The method of claim 6, wherein said method additionally comprises the step (e), subsequent to said step (d), of exposing said enclosure to an atmosphere that contains one or more cyclopropene compound.

## Patentansprüche

1. Umhüllung, umfassend:
einen polymeren Film; wobei der polymere Film einen oder mehrere Copolymere von Ethylen mit einem polaren Monomer umfasst;
wobei das Volumen der Umhüllung zwischen 250 Liter und 500 Liter liegt;
wobei die Sauerstoffübertragungsrate der Umhüllung zwischen 8.000 und 16.000 cm³/h liegt; und
wobei die Umhüllung zwischen 1688 und 2195 Perforationen umfasst und wobei die Perforationen zwischen 5 und 6,5 mm voneinander beabstandet sind.

2. Umhüllung nach Anspruch 1, wobei der polymere Film ferner einen oder mehrere Olefinpolymere umfasst.

3. Umhüllung nach Anspruch 1, wobei das polare Monomer Vinylacetat ist.

4. Umhüllung nach Anspruch 1, wobei die Menge an polymerisierten Einheiten des polaren Monomers zwischen 0,05Gew.-% und 18Gew.-%, basierend auf dem Gewicht des polymeren Films, beträgt.

5. Umhüllung nach Anspruch 1, wobei der polymere Film ein einschichtiger Film ist.

6. Verfahren zum Handhaben von Bananen, umfassend:
(a) Ernten grüner Bananen;
(b) dann Platzieren der grünen Bananen in die Umhüllung nach Anspruch 1;
(c) dann Lagern der Umhüllung bei 20 °C oder niedriger für 1 Woche oder länger;
(d) dann Reifen der Bananen oder Reifenlassen der Bananen.

7. Verfahren nach Anspruch 6, wobei die Dauer des Schrittes (b) 2 Wochen oder mehr beträgt.

8. Verfahren nach Anspruch 6, wobei der Schritt (d) Aussetzen der Umhüllung gegenüber einer Atmosphäre, die Ethylen enthält, umfasst.

9. Verfahren nach Anspruch 6, wobei das Verfahren zusätzlich den Schritt (e) des Aussetzens der Umhüllung gegenüber einer Atmosphäre, die eine oder mehrere Cyclopropenverbindungen enthält, nachfolgend zu dem Schritt (d) umfasst.

## Revendications

1. Enveloppe comprenant :
un film polymérique ; dans laquelle ledit film polymérique comprend un ou plusieurs copolymères d'éthylène avec un monomère polaire ;
dans laquelle le volume de ladite enveloppe varie de 250 litres à 500 litres ;
dans laquelle le taux de transmission d'oxygène de ladite enveloppe varie de 8 000 à 16 000 cm3/heure ; et
dans laquelle l'enveloppe comprend entre 1 688 et 2 195 perforations, et dans laquelle les perforations sont espacées de 5 à 6,5 mm.

2. Enveloppe selon la revendication 1, dans laquelle ledit film polymérique comprend en outre au moins un polymère d'oléfine.

3. Enveloppe selon la revendication 1, dans laquelle ledit monomère polaire est l'acétate de vinyle.

4. Enveloppe selon la revendication 1, la quantité d'unités polymérisées dudit monomère polaire varie de 0,05 % à 18 % en poids, basée sur le poids dudit film polymérique.

5. Enveloppe selon la revendication 1, dans laquelle ledit film polymérique est un film à couche simple.

6. Procédé de manutention de bananes comprenant les étapes consistant à :
(a) récolter des bananes vertes ;
(b) puis à placer lesdites bananes vertes dans l'enveloppe selon la revendication 1 ;
(c) puis à stocker ladite enveloppe à 20 °C ou moins pendant une semaine ou plus ;
(d) puis à faire mûrir lesdites bananes ou à permettre auxdites bananes de mûrir.

7. Procédé selon la revendication 6, dans lequel la durée de ladite étape (b) est de deux semaines ou plus.

8. Procédé selon la revendication 6, dans lequel ladite étape (d) comprend l'exposition de ladite enveloppe à une atmosphère qui contient de l'éthylène.

9. Procédé selon la revendication 6, dans lequel ledit procédé comprend en outre l'étape (e), subséquente à ladite étape (d), d'exposer ladite enveloppe à une atmosphère qui contient un ou plusieurs composés de cyclopropène.
